# EUROPÄISCHE PATENTSCHRIFT

(11) **EP 0 374 486 B1**
(45) Veröffentlichungstag und Bekanntmachung des Hinweises auf die Patenterteilung: **02.02.1994**
(21) Anmeldenummer: 89121298.7
(22) Anmeldetag: 17.11.1989
(51) Int. Cl.: A47F 5/10, F16B 12/14

(54) **Vorrichtung zum Präsentieren von Ausstellunsgobjekten**
Display device for showing exhibition articles
Dispositif pour la présentation d'objets d'exposition

(30) Priorität: 23.12.1988 DE 8816010 U
(43) Veröffentlichungstag der Anmeldung: 27.06.1990
(73) Patentinhaber: Bosch-Siemens Hausgeräte GmbH, 81669 München (DE)
(72) Erfinder: Killi, Rainer, D-8000 München 70 (DE)

(56) Entgegenhaltungen:
- DE-A- 1 916 066
- US-A- 2 940 606
- US-A- 3 121 977
- US-A- 4 610 560

## Beschreibung

Die Erfindung betrifft eine Vorrichtung zum Präsentieren von Ausstellungsobjekten, bestehend aus in senkrecht aufeinanderstehenden Ebenen beliebig verbindbaren, selbsttragenden, untereinander gleich groß und quadratisch oder rechteckig ausgebildeten Rahmen, die aus fest untereinander verbundenen Rahmenschenkeln mit quadratischem oder rechteckigem Querschnitt gebildet sind, an den Rahmen befestigbaren Frontwänden und/oder Rückwänden und aus Verbindungselementen, wobei zwei Rahmentypen gebildet sind, von denen der eine Typ ein quadratischer Rahmen und der andere Typ ein ungleichseitiger, rechteckiger Rahmen ist, dessen eine Seitenlange der Seitenlänge des Quadrates und dessen andere Seitenlänge einer halben Seitenlänge des Quadrates entspricht, und wobei jeder Rahmen mit senkrecht auf den Seitenflächen seiner Rahmenschenkel stehenden, sich auf seiner Längsachse kreuzenden Bohrungen für die Verbindungselemente ausgestattet ist, und wobei die Frontwände und die Rückwände gleiche Seitenmaße wie die Rahmen aufweisen.

Am Markt bekannte Vorrichtungen zum Präsentieren von Ausstellungsobjekten sind aus senkrechten Streben mittels daran lösbar befestigten senkrechten Wänden und auf Trägern aufgelegten, waagerechten Auflageböden zusammengesetzt. Die senkrechten Streben weisen ein quadratisches Hohlprofil aus Metall auf. In die Seitenflächen des Hohlprofiles sind über die gesamte Länge der Streben rasterartig Langlöcher angeordnet, in die die senkrechten Flächen und/oder die waagrechten Träger für Auflageböden mittels daran angeformten Haken eingehängt werden. Um einer Vorrichtung zum Präsentieren von Ausstellungsobjekten nach der am Markt bekannten Ausführung ein interessantes, ansprechendes, abwechslungsreiches Aussehen zu verleihen, müssen die Bestandteile in einer großen Vielzahl unterschiedlichster Größen und Längen vorrätig sein. Beim Aufstellen einer derartigen Vorrichtung ist es notwendig, die senkrechten Streben in dem ungefähren Abstand der einzuhängenden senkrechten Wände zu halten, um das Einhängen der senkrechten Wände zu ermöglichen. Während des Aufbaus muß der zusammengehängte Teil der Vorrichtung solange gehalten werden, bis ein statisch selbststehender Körper entstanden ist. Beim späteren Abnehmen einer oder mehrerer senkrechten Wände, z.B. zum Erzeugen einer fensterartigen Öffnung, wird es notwendig, an den entsprechenden, senkrechten Streben die oberhalb der geplanten Öffnung eingehängten senkrechten Wände vollständig abzunehmen, bevor die gewünschte(n) senkrechte(n) Wand oder Wände entnommen werden können.

Aus der US-PS 46 10 560 ist eine Vorrichtung zum Präsentieren von Ausstellungsobjekten bekannt geworden, die aus einer Seite geschlitzten Vierkanthohlprofilen besteht, die hauptsächlich an den Senkrechten der zusammengebauten Vorrichtung angeordnet sind und die an ihren im Zusammenbau oben liegenden Enden mit senkrecht nach oben vorstehenden Verbindungszapfen ausgestattet sind, wobei über zwei nebeneinander liegende Verbindungszapfen eine Verbindungslasche mit zwei Bohrungen gesteckt wird. In den seitlichen Schlitzen der Hohlprofile werden zwischen den Hohlprofilen anzuordnende Platten aufgenommen. Es sind mehrere Längen von Hohlprofilen beschrieben, wobei aus Platten, die an den Seitenkanten mit Hohlprofilen ausgestattet sind, Podestplatten gebildet werden können.

Weiter ist aus der US-PS 29 40 606 eine Vorrichtung zum Verbinden von plattenartigen Elementen bekannt, bei der um die Platten ein zusammensteckbarer Rahmen gebildet wird. Die Eckverbinder des Rahmens weisen in 90° angeordnete Schenkel auf, die jeweils einen Verbindungszapfen aufweisen und wobei ein Schenkel auf der dem Verbindungszapfen entgegengesetzten Seite durch eine flache Verbindungslasche mit Bohrung verlängert ist. Die zu verkleidenden Platten sind an einem auf der auf der Winkelhalbierenden des eingeschlossenen rechten Winkels vorragenden, am vorderen Ende geschlitzten Steg des Eckverbinders aufgenommen und mittels einer Schraube befestigt. Die Rahmen um die zu verkleidenden Platten werden durch Aufstecken von Rohren auf die Verbindungszapfen der Eckverbinder gebildet und die vorstehenden Verbindungslaschen dienen zur Verbindung von nebeneinander angeordneten Rahmen. Die in Zusammenbaulage bodenseitigen Eckverbinder der Vorrichtung weisen anstelle der Verbindungslaschen vorstehende Stutzen auf, die als Aufstellfuß ausgestattet sind.

Ferner ist in der US-PS 31 21 977 eine Anordnung zum Verkleiden von Wänden oder Decken mit vorgefertigten, plattenförmigen Elementen gezeigt, bei der als Untergrund zur Befestigung der Elemente an der zu verkleidenden Wand oder Decke ein Netz aus vorgefertigten Rahmen angebracht wird, auf die die vorgefertigten, plattenförmigen Elemente mittels doppelseitigem Klebeband befestigt werden. In einer besonderen Ausführungsform sind weiterhin von einer Decke, z.B. zur Verkleidung eines Leuchtkörpers, mittels Abstandshaltern abgehängte, plattenförmige Elemente, z.B. aus transparentem Material, beschrieben, die mittels an den Abstandshaltern angebrachten Permanentmagneten und an den Elementen angeklebten Streifen aus magnetischem Material befestigt sind.

Endlich ist aus der DE-OS 19 16 066 eine Vorrichtung zum Präsentieren von Ausstellungsobjekten der eingangs genannten Art bekannt geworden. Nachteilig an dieser Vorrichtung ist, daß eine Vielzahl verschiedener Teile zum Aufbau der Vorrichtung zusammengesucht und dann zusammengesetzt werden müssen. Ebenso sind bei der aus der DE-OS 19 16 066 bekanntgewordenen Vorrichtung nachteilig, daß die Rahmen aufgrund der Anordnung der Bohrungen nicht versetzt zueinander angeordnet werden können.

Der Erfindung liegt die Aufgabe zugrunde, die vorbeschriebenen Nachteile der bekannten Ausführungsformen zu vermeiden, die Montagearbeit zu erleichtern und ein versetztes Montieren der Rahmenteile zu ermöglichen.

Diese Aufgabe wird erfindungemäß durch die im Kennzeichnungsteil des unabhängigen Patentanspruches 1 angegebenen Merkmale gelöst.

Die Montagearbeit wird durch die Zusammenstellung eines Bausatzes erleichtert. Die versetzte Anordnung von Rahmen wird durch die erfindungsgemäße Anordnung der Bohrungen für die Verbindungselemente ermöglicht.

Vorteilhafte Ausgestaltungen der erfindungsgemäßen Vorrichtung zum Präsentieren von Ausstellungsobjekten sind in den weiteren abhängigen Ansprüchen gekennzeichnet.

Anhand der Zeichnung wird die Erfindung im folgenden in Ausführungsbeispielen näher erläutert. Es zeigt:
- Fig. 1: einen mit einem anderen gleich großen, quadratischen Rahmen verbundenen Rahmen in der Vorderansicht,
- Fig. 2: einen Schnitt durch die in Fig. 1 gezeigte Anordnung entlang den Schnittlinien II-II in der Draufsicht,
- Fig. 3: einen ungleichseitig, rechteckigen Rahmen,
- Fig. 4: einen Schnitt durch einen Rahmen mit befestigter Vorderwand,
- Fig. 5: einen Schnitt durch einen Rahmen mit befestigter Rückwand,
- Fig. 6: den Aufbau der Vorrichtung für einen Podest in einem Vertikalschnitt senkrecht auf die Vorderseite des Aufbaus,
- Fig. 7: eine Draufsicht auf den Podest gemäß Fig. 6 mit teilweise gebrochener Podestplatte,
- Fig. 8: eine vergrößerte Darstellung der Verbindung zweier Rahmen gemäß Einzelheit A in Fig. 1,
- Fig. 9: eine vergrößerte Darstellung der Verbindung einer Frontwand mit dem Rahmen gemäß Einzelheit C in Fig. 4,
- Fig. 10: eine vergrößerte Darstellung der Verbindung einer Rückwand mit dem Rahmen gemäß Einzelheit D in Fig. 5,
- Fig. 11: eine vergrößerte Darstellung der Anbringung von Kunststoffgleitern oder Stellfüßen gemäß Einzelheit B in Fig. 1,
- Fig. 12: ein Beispiel für eine aufgestellte Vorrichtung gemäß der Erfindung und
- Fig. 13: ein weiteres Beispiel für eine aufgestellte Vorrichtung gemäß der Erfindung.

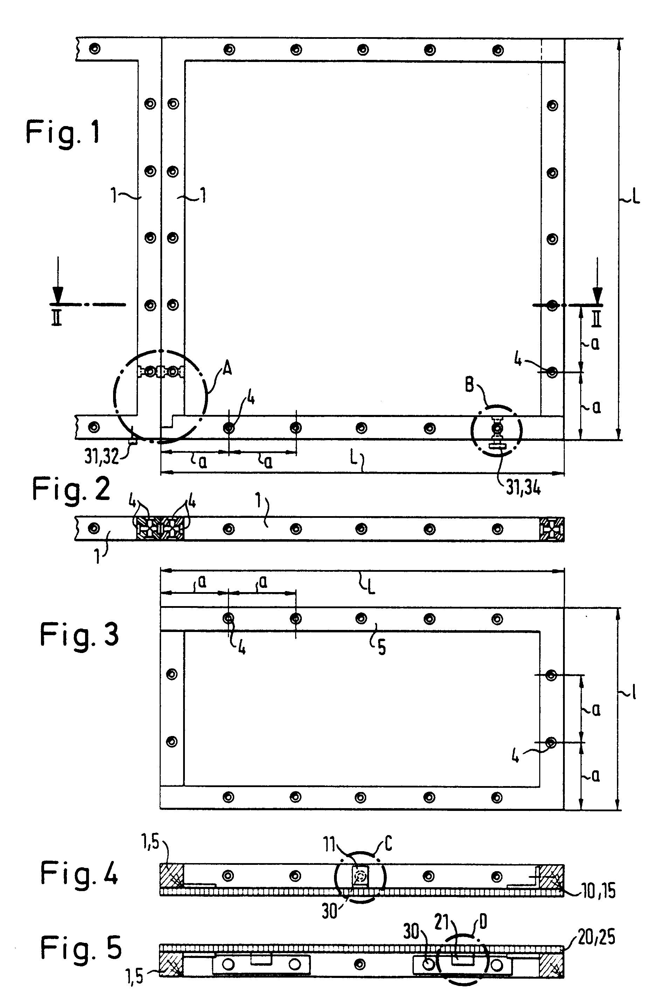

Die erfindungsgemäße Vorrichtung zum Präsentieren von Ausstellungsobjekten beinhaltet einen Bausatz aus einer Anzahl von selbsttragenden Rahmen 1, 5, die in senkrecht aufeinanderstehenden Ebenen beliebig verbindbar sind. Frontwände 10, 15 und/oder Rückwände 20, 25 sind an den Rahmen 1, 5 mittels Verbindungselementen 30 befestigbar. Deren Mindestanzahl ergibt sich aus der Zahl der aneinanderstoßenden Rahmen 1, 5. Hauptbestandteil der zusammengesetzten Vorrichtung sind Rahmen 1, gemäß Fig. 1. Weitere Rahmentypen können wie der in Fig. 3 gezeigte Rahmen 5 ausgebildet sein, wobei dessen kurze Seitenlänge l einer halben Seitenlänge L des quadratischen Rahmens entspricht. Die Rahmen 1, 5 sind aus fest untereinander verbundenen Rahmenschenkeln mit quadratischem Querschnitt gebildet. Jeder Rahmenschenkel ist für die Verbindungselemente 30 mit senkrecht auf seinen Seitenflächen stehenden Bohrungen 4 ausgestattet, die sich auf der Längsachse des Rahmenschenkels kreuzen. Die Mittellinien der Bohrungen 4 weisen gleiche Abstände a von den Eckpunkten der Rahmen 1, 5 und untereinander auf. Die Verbindungslemente für die Rahmen 1, 5 sind handelsübliche Möbelverbinder 30. Die Frontwände 10, 15 wie auch die Rückwände 20, 25 weisen die gleichen Seitenmaße L bzw. l auf wie die Rahmen 1 und 5.

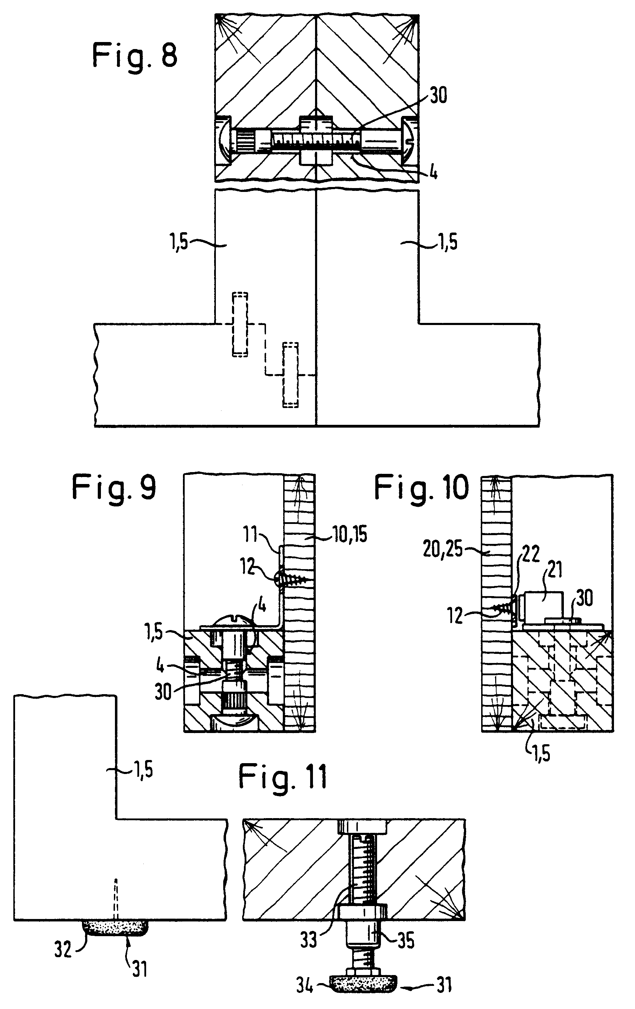

Bei dem Ausführungsbeispiel sind, wie in Fig. 4 und 9 gezeigt, die Frontwände 10, 15 mittels in die Rahmen 1, 5 ragenden Winkeln 11 verbunden. Die Winkel 11 sind mit den Rahmen 1, 5 mittels gleicher Verbindungselemente an dem Rahmen 1, 5 befestigbar, wie sie zur Verbindung der Rahmen 1, 5 selbst verwendet werden, nämlich mittels Möbelverbindern 30. Die Winkel 11 sind mittels Holzschrauben 12 an den Frontwänden 10, 15 befestigt.

Die Rückwände sind, wie in Fig. 5 und 10 gezeigt, mittels in den Rahmen 1, 5 angeordneten Magnetschnäppern 21 mit den Rahmenschenkeln verbunden. Die Magnetanker 22 sind an den Rückwänden 20, 25 mittels Holzschrauben 12 befestigt.

Sämtliche Winkel 11 und Magnetschnäpper 21 können an den Rahmenschenkeln nach Wahl mittels Verbindungselementen, wie Möbelverbinder 30 oder Holzschrauben 12 befestigt werden.

In dem Bausatz können zum Belegen der bei zusammengesetzter Vorrichtung freiliegenden Rahmenschenkel nicht gezeigte Blendenleisten enthalten sein.

Wie in Fig. 1 und 11 gezeigt, enthält der Bausatz Gleitfüße 31 für die bodenseitigen Rahmenschenkel. Die Gleitfüße 31 bestehen aus handelsüblichen, nagelbaren Kunststoffgleitern 32 oder aus mit Kunststoff-Gleitkappen 34 überzogenen Schrauben 33, die in passende Enschlagmuttern 35 für die bodenseitigen Rahmenschenkel geführt sind.

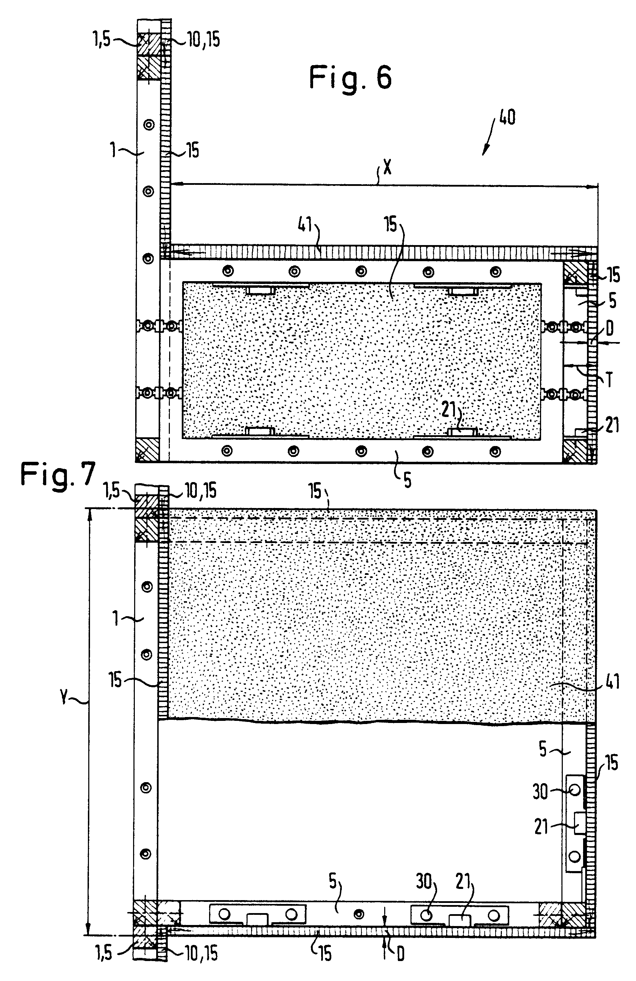

Wie in Fig. 6 und 7 gezeigt, enthält der Bausatz für einen tiefen Podest 40 mindestens eine rechteckige, tiefe Podestplatte 41. Deren Seitenlänge X als Tiefe der Podestplatte 41 ist die Summe der Seitenlänge L eines senkrecht zu der Frontwand 15 stehenden, rechteckigen Rahmens 5 und der Tiefe T eines parallel zur Frontwand vorgesetzten Rahmens 5. Die andere Seitenlänge Y als Breite der Podestplatte 41 ist die Summe der Seitenlänge L des vorgesetzten Rahmens 5 und zweier Dicken D der seitlich angesetzten Frontwände 15.

Es ist auch möglich, einen nicht gezeigten, ungefähr halbtiefen Podest aus den Teilen des Bausatzes zu erstellen, bei dem die kurze Seitenlänge l des rechteckigen Rahmens 5 die Tiefe des Podestes bestimmt. Für diesen Fall ist eine schmale Podestplatte im Bausatz enthalten, deren Tiefe die Summe aus der kurzen Seitenlänge l des Rahmens 5 und der Tiefe T eines vorgesetzten Rahmens 5 ist.

Die für den Podest verwendeten, vorgesetzten Frontwände 15 sind mittels Magnetschnäppern 21 mit den Rahmenschenkeln verbunden.

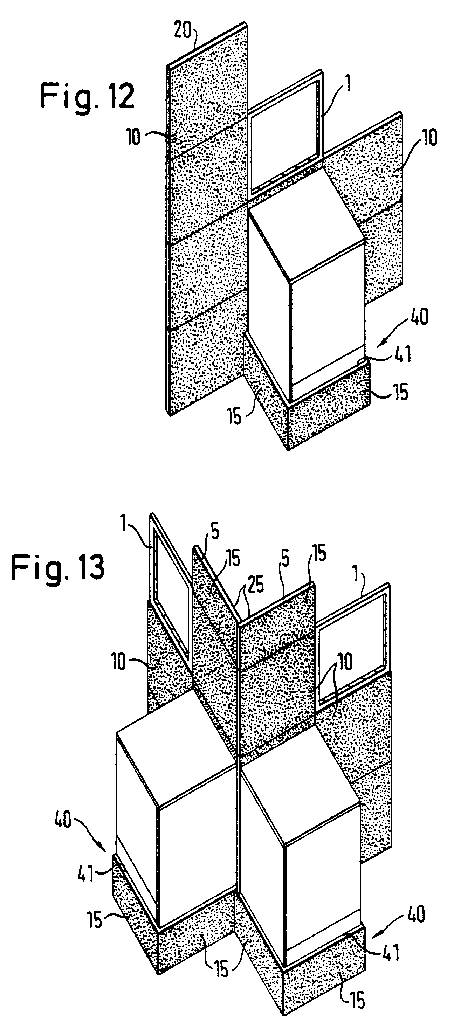

Die Figuren 12 und 13 zeigen zwei Beispiele für zusammengesetzte Bausätze nach der erfindinngsgemäßen Vorrichtung.

In Fig. 12 sind quadratische Rahmen 1 in einer einzigen, senkrechten Ebene zusammengesetzt. Ein Podest 40 ist nach dem in Fig. 6 und 7 gezeigten Aufbau enthalten, auf dem beispielsweise ein schematisch dargestelltes Haushaltgerät präsentiert wird.

In Fig. 13 sind quadratische Rahmen 1 und rechteckige Rahmen 5 in zwei rechtwinklig aufeinanderstehenden, senkrechten Ebenen angeordnet und zwei Podeste 40 nach dem in Fig. 6 und 7 gezeigten Aufbau enthalten.

Bei den beiden Beispielen sind unverkleidete, quadratische Rahmen 1 enthalten, die aus dekorativen oder besonderen Gründen werblicher Art Fenster bilden.

Die übersichtliche Gestaltung der Bausatzelemente - insbesondere hinsichtlich der als zugehörig erkennbaren Verbindungselemente (Bohrungen, Möbelverbinder und dgl.) - gestattet den planvollen Aufbau einer Präsentationsvorrichtung ohne vorherige Schulung nach einem skizzierten Plan.

Wegen der in sich stabilen Rahmenelemente ist zum Aufbau keine weitere Person nötig, die bis zur Herstellung einer Eigenstabilität den Aufbau festhalten müßte. Ohne den Aufbau substantiell zu verändern, sind vielzählige Dekorationsvariationen durch Abnehmen oder Hinzufügen von Frontwänden und ggf. Rückwänden möglich. Weitere Dekorationsvarianten sind durch Hinzufügen oder Abnehmen einzelner Rahmenelemente gestaltbar.

## Patentansprüche

1. Vorrichtung zum Präsentieren von Ausstellungsobjekten, bestehend aus in senkrecht aufeinanderstehenden Ebenen beliebig verbindbaren, selbsttragenden, untereinander gleich groß und quadratisch oder rechteckig ausgebildeten Rahmen (1, 5), die aus fest untereinander verbundenen Rahmenschenkeln mit quadratischem oder rechteckigem Querschnitt gebildet sind, an den Rahmen (1, 5) befestigbaren Frontwänden (10, 15) und/oder Rückwänden (20, 25) und aus Verbindungselementen (30), wobei zwei Rahmentypen (1, 5) gebildet sind, von denen der eine Typ ein quadratischer Rahmen (1) und der andere Typ ein ungleichseitiger, rechteckiger Rahmen (5) ist, dessen eine Seitenlänge (L) der Seitenlänge des Quadrates und dessen andere Seitenlänge (l) einer halben Seitenlänge (L) des Quadrates entspricht, und wobei jeder Rahmen mit senkrecht auf den Seitenflächen seiner Rahmenschenkel stehenden, sich auf seiner Längsachse kreuzenden Bohrungen (4) für die Verbindungselemente (30) ausgestattet ist, und wobei die Frontwände (10, 15) und die Rückwände (20, 25) gleiche Seitenmaße (L, l) wie die Rahmen (1, 5) aufweisen, **gekennzeichnet** durch einen Bausatz aus einer Anzahl von Rahmen (1, 5), einer weiteren Anzahl von Frontwänden (10, 15) und/oder Rückwänden (20, 25) und Verbindungselmenten (30), deren Mindestanzahl sich aus der Zahl der aneinanderstoßenden Rahmen (1, 5) ergibt, und dadurch, daß die Mittellinien der Bohrungen (4) gleiche Abstände (a) von den Eckpunkten der Rahmen (1, 5) und untereinander aufweisen und die Abstände (a) von den Eckpunkten der Rahmen (1, 5) und die Abstände (a) von den Mittellinien der Bohrungen (4) gleich sind.

2. Vorrichtung nach Anspruch 1, dadurch gekennzeichnet, daß der Bausatz mindestens eine rechteckige Podestplatte (41) enthält, deren eine Seitenlänge (Y) als Breite der Podestplatte (41) gleich der Summe der Seitenlänge (L) des Rahmens (5) und zweier Dicken (D) der Frontwände (15) und dessen andere Seitenlänge (X) als Tiefe der Podestplatte (41) gleich der Summe der großen Länge (L) oder der kleinen Seitenlänge (l) des rechteckigen Rahmens (5) und der Tiefe (T) des Rahmens (5) ist.

3. Vorrichtung nach Anspruch 1 oder 2, dadurch gekennzeichnet, daß die Frontwände (10, 15) mittels in die Rahmen (1, 5) ragenden Winkeln (11) mit den Rahmenschenkeln verbindbar sind.

4. Vorrichtung nach einem der Ansprüche 1 bis 3, dadurch gekennzeichnet, daß die Frontwände (10, 15) und/oder die Rückwände (20, 25) mittels in den Rahmen (1, 5) angeordneten Magnetschnäppern (21) mit den Rahmenschenkeln verbindbar sind.

5. Vorrichtung nach einem der Ansprüche 1 bis 4, dadurch gekennzeichnet, daß der Bausatz Blendleisten zum Belegen der bei zusammengesetztem Bausatz freiliegenden Rahmenschenkel-Flächen enthält.

6. Vorrichtdung nach einem der Ansprüche 1 bis 5, dadurch gekennzeichnet, daß der Bausatz Gleitfüße (31) für die bei zusammengesetztem Bausatz bodenseitigen Rahmenschenkel enthält.

7. Vorrichtung nach Anspruch 6, dadurch gekennzeichnet, daß die Gleitfüße (31) aus handelsüblichen, nagelbaren Kunststoffgleitern bestehen.

8. Vorrichtung nach Anspruch 6, dadurch gekennzeichnet, daß die Gleitfüße (31) aus mit Kunststoff-Gleitkappen (34) überzogenen Schrauben (33) bestehen, die in passende Einschlagmuttern (35) für die bodenseitigen Rahmenschenkel geführt sind.

9. Vorrichtung nach einem der Ansprüche 1 bis 8, dadurch gekennzeichnet, daß die Verbindungselemente (30) handelsübliche Möbelverbinder (30) sind.

## Claims

1. Device for the presentation of exhibition objects and consisting of self-supporting quadrangularly or rectangularly constructed frames (1, 5), which are of equal size, connectible as desired in mutually perpendicular planes and formed of frame limbs which are of quadrangular or rectangular cross-section and firmly connected one with the other, of front walls (10, 15) and/or rear walls (20, 25) fastenable at the frames (1, 5) and of connecting elements (30), wherein two frame types (1, 5) are formed, of which the one type is a square frame (1) and the other type is a scalene rectangular frame (5), the one side length (L) of which corresponds to the side length of the square and the other side length (l) of which corresponds to half a side length (L) of the square, each frame is equipped with bores (4), which are perpendicular to the side surfaces of its frame limbs and cross on its longitudinal axis, for the connecting elements (30) and wherein the front walls (10, 15) and the rear walls (20, 25) display the same side dimensions (L, l) as the frames (1, 5), characterised by a kit of a number of frames (1, 5), a further number of front walls (10, 15) and/or rear walls (20, 25) and connecting elements (30), the minimum number of which is given by the number of mutually abutting frames (1, 5), and thereby, that the centre lines of the bores (4) display equal spacings (a) from the corner points of the frames (1, 5) and one among the other and the spacings (a) from the corner points of the frames (1, 5) are equal to the spacings (a) from the centre lines of the bores (4).

2. Device according to claim 1, characterised thereby, that the kit contains at least one rectangular platform plate (41), the one side length (Y) of which as width of the platform plate (41) is equal to the sum of the side length (L) of the frame (5) and two thicknesses (D) of the front walls (15) and the other side length (X) of which as depth of the platform plate (41) is equal to the sum of the major length (L) or the minor side length (l) of the rectangular frame (5) and the depth (T) of the frame (5).

3. Device according to claim 1 or 2, characterised thereby, that the front walls (10, 15) are connectible with the frame limbs by means of brackets (11) projecting into the frames (1, 5).

4. Device according to one of the claims 1 to 3, characterised thereby, that the front walls (10, 15) and/or the rear walls (20, 25) are connectible with the frame limbs by means of magnetic catches (21) arranged in the frames (1, 5)

5. Device according to one of the claims 1 to 4, characterised thereby, that the kit contains concealing strips for covering the frame limb surfaces which are exposed when the kit is assembled.

6. Device according to one of the claims 1 to 5, characterised thereby, that the kit contains sliding feet (31) for the frame limbs which are at the base when the kit is assembled.

7. Device according to claim 6, characterised thereby, that the sliding feet (31) consist of commercially usual nailable synthetic material sliders.

8. Device according to claim 6, characterised thereby, that the sliding feet (31) consist of screws (33), which are coated by synthetic material slide caps (33) and guided in fitting insert nuts (35) for the frame limbs at the base side.

9. Device according to one of the claims 1 to 8, characterised thereby, that the connecting elements (30) are commercially usual furniture connectors (30).

## Revendications

1. Dispositif pour la présentation d'objets d'exposition, composé de cadres (1, 5) autoporteurs carrés ou rectangulaires, de même dimension qui peuvent liés entre d'une manière quelconque dans des plans superposés et sont formés de montants de section carrée ou rectanoaulaire qui sont liés entre eux de manière fixe, de panneaux de façade (10, 15) et/ou de panneaux arrières (20, 25) qui peuvent être fixés sur le cadre (1, 5) ainsi que d'éléments de liaison (30), deux types de cadres (1, 5) étant formés, parmi lesquels l'un est un cadre carré (1) et l'autre un cadre rectangulaire (5) à côtés inégaux, dont un côté a une longueur (L) qui correspond à celle d'un côté du carré et dont l'autre côté a une longueur (l) qui correspond à la moitié de la longueur (L) du côté du carré, chaque cadre étant pourvu de perçages pour les éléments de liaison (30) qui s'étendent perpendiculairement sur les faces latérales de ses montants et les panneaux de façade (10, 15) et les panneaux arrières (20, 25) ayant des côtés de mêmes dimensions (L, l) que le les cadres (1, 5), dispositif caractérisé par un ensemble de construction formé d'un certain nombre de cadres (1,5), un certain nombre de panneaux de façade (10, 15) et/ou de panneaux arrières (20, 25) et d'éléments de liaison (30), dont le nombre minimal est fonction du nombre de cadres (1, 5) mis bout à bout et par le fait que les axes des perçages (4) sont disposés à la même distance (a) les uns des autres et par rapport aux angles du cadre (1, 5) et les distances (a) par rapport aux angles des cadres (1, 5) sont égales aux distances (a) entre les axes des perçages (4).

2. Dispositif selon la revendication 1, caractérisé par le fait que l'ensemble de construction comprend au moins une plaque de base (41) rectangulaire dont la longueur (Y) d'un côté, en tant que largeur de la plaque de base (41), est égale à la somme de la longueur (L) du côté du cadre (5) et de deux épaisseurs (D) des panneaux de façade (15) et dont la longueur (X) de l'autre côté, en tant que profondeur de la plaque de base (41), est égale à la somme de la grande longueur (L) ou de la petite longueur (l) de côté du cadre rectangulaire (5) et de la profondeur (T) du cadre (5).

3. Dispositif selon la revendication 1 ou 2, caractérisé par le fait que les panneaux de façade (10, 15) peuvent être reliés aux montants du cadre par l'intermédiaire d'équerres (11) qui pénètrent dans les cadres (1, 5).

4. Dispositif selon l'une des revendications 1 à 3, caractérisé par le fait que les panneaux de façade (10, 15) et/ou les panneaux arrières (20, 25) peuvent être reliés aux montants du cadre par l'intermédiaire de verrous (21) magnétiques disposés sur les montants du cadre.

5. Dispositif selon l'une des revendications 1 à 4, caractérisé par le fait que l'ensemble de construction comprend des caches pour combler les surfaces des montants laissées libres lorsque l'ensemble est monté.

6. Dispositif selon l'une des revendications 1 à 5, caractérisé par le fait que l'ensemble de construction comprend des pieds (31) lisses pour les montants de cadre situés côté sol lorsque l'ensemble est monté.

7. Dispositif selon la revendication 5, caractérisé par le fait que les pieds (31) lisses sont constitués par des patins du commerce en matière plastique qui peuvent être cloués.

8. Dispositif selon la revendication 6, caractérisé par le fait que les pieds (31) lisses sont constitués par des vis (33) recouvertes de coiffes en matière plastique, qui pénètrent dans des écrous à enfoncer (35) adaptés pour les montants de cadre situés côté sol.

9. Dispositif selon la revendication 1 à 8, caractérisé par le fait que les éléments de liaison (30) sont des éléments d'assemblage pour meubles (30) du commerce.
